**Europäisches Patentamt**

**European Patent Office**

**Office européen des brevets**

(19)

(11) Veröffentlichungsnummer : **0 128 485 B1**

# (12) EUROPÄISCHE PATENTSCHRIFT

(45) Veröffentlichungstag der Patentschrift : 09.11.88

(21) Anmeldenummer : 84106284.7

(22) Anmeldetag : 01.06.84

(51) Int. Cl.⁴ : **F 24 F 13/06**, F 24 F 11/053, G 05 D 23/20

(54) **Fussbodenauslass für Lüftungs- und Klimaanlagen.**

(30) Priorität : 08.06.83 GB 8315688

(43) Veröffentlichungstag der Anmeldung : 19.12.84 Patentblatt 84/51

(45) Bekanntmachung des Hinweises auf die Patenterteilung : 09.11.88 Patentblatt 88/45

(84) Benannte Vertragsstaaten : **AT BE CH DE FR GB IT. LI LU NL SE**

(56) Entgegenhaltungen :
DE-A- 2 421 120
DE-A- 2 536 840
DE-A- 2 634 786
FR-A- 1 140 735

(73) Patentinhaber : **Gebrüder Trox, GmbH Heinrich-Trox-Platz 1 D-4133 Neukirchen-Vluyn (DE)**

(72) Erfinder : **Fey, Michael Bruchhauser Weg 6 D-4010 Hilden (DE)**
Erfinder : **Finkelstein, Wolfgang Peschkenstrasse 3a D-4133 Neukirchen-Vluyn (DE)**
Erfinder : **Haaz, Josef Friesenweg 20 D-4133 Neukirchen-Vluyn (DE)**
Erfinder : **Riegel, Hans Viernheimer Strasse 10 D-4170 Geldern (DE)**

(74) Vertreter : **Stark, Walter, Dr.-Ing. Moerser Strasse 140 D-4150 Krefeld (DE)**

## Beschreibung

Die Erfindung betrifft einen Fußbodenauslaß für Lüftungs- und Klimaanlagen mit einer in einen Boden einsetzbaren, an einen Einlaßstutzen angeschlossenen Luftkammer, die mit einem Rost abgedeckt ist und in der sich Leitelemente befinden.

Üblicherweise werden Räume, die an eine Lüftungs- oder Klimaanlage angeschlossen sind, über sogenannte Deckenauslässe belüftet. Diese haben den Vorteil, daß die betreffenden Räume zugfrei belüftet werden können und daß die zugeführte, gegebenenfalls temperierte Luft sich ohne weiteres und ohne Zugerscheinungen mit der Raumluft mischt. In manchen Fällen ist es allerdings nicht möglich, Deckenauslässe anzuordnen. Dann ist es notwendig, Fußbodenauslässe vorzusehen. Die üblicherweise kalte Luft tritt dann unmittelbar in den betreffenden Raum ein. Dabei ergeben sich unerwünschte Zugerscheinungen und in weiten Grenzen auch Temperaturunterschiede z. B. zwischen Bodenbereich und Deckenbereich.

Es ist bereits bekannt (DE-A-2 536 840), einen aus einem Fußbodenauslaß austretenden Luftstrom so zu beeinflussen, daß eine weitgehende Durchmischung des zugeführten Luftstroms mit der Raumluft insbesondere im unteren Bereich des Raumes erfolgt. Dazu wird der Luftstrom durch den Rost in eine große Zahl feiner, voneinander unabhängiger Luftstrahlen aufgelöst, die durch Ablenkung auch aufgefächert werden können. Der Rost weist eine Mehrzahl von auf einem Teilkreis angeordneten Durchlaßöffnungen auf, aus denen die einzelnen Luftstrahlen austreten. Mit einer solchen Anordnung kann aber die Durchmischung und Verteilung des zugeführten Luftstromes nur im unmittelbaren Bereich des Fußbodenauslasses beeinflußt werden, weil die einzelnen Luftstrahlen nur eine verhältnismäßig geringe Eindringtiefe besitzen. Für die Verteilung des zugeführten Luftstromes in weiter entfernte Bereiche des Raumes müssen zusätzliche Maßnahmen ergriffen werden.

Ferner ist es bekannt (DE-A-24 21 120), dem aus einen Deckenluftauslaß austretenden Luftstrahl eine Drallströmung zu überlagern. Die Drallströmung wird in einer Luftleitkammer erzeugt. Die Luft tritt dann durch ein Luftauslaßgitter mit zueinander konzentrischen, rechteckigen oder quadratischen Austrittsschlitzen aus. Dadurch wird die Drallströmung wieder gestört.

Aufgabe der Erfindung ist es, einen Fußbodenauslaß anzugeben, mit dem eine zugfreie Belüftung von Räumen bei gleicher Temperaturverteilung im Raum möglich ist.

Diese Aufgabe wird dadurch gelöst, daß zum Erzeugen eines Wirbels mit im wesentlichen senkrecht zur Rostebene gerichteter Wirbelachse der Rost aus konzentrisch zueinander angeordneten, kreisförmigen Ringelementen besteht, und unter dem Rost ein scheibenförmiger Leitkörper mit radial von der Scheibe ausgehenden, gegen die Ebene des Leitkörpers verdrillten Leitschaufeln angeordnet ist.

Dadurch wird erreicht, daß der Luftstrahl aus dem Fußbodenauslaß in Form eines Wirbels austritt. Ein Wirbel beeinflußt bekanntlich nicht nur seine unmittelbare Umgebung, sondern er hat auch Fernwirkung, die zwar mit zunehmender Entfernung abnimmt, gleichwohl aber nicht vernachlässigbar ist. Dementsprechend wird mit Hilfe dieses Wirbels auch die Verteilung und die Durchmischung des Luftstromes mit der Raumluft in weiter entfernten Bereichen des Raumes beeinflußt. Die Durchmischung und Verteilung insbesondere in den weiter entfernten Bereichen des Raumes erfolgt praktisch zugfrei. Temperaturunterschiede im Raum werden ausgeglichen und Temperaturgradienten innerhalb des Raumes weitgehend vermieden.

Weil der Wirbel erst unmittelbar unterhalb des Rostes erzeugt wird, besteht weitgehende Gestaltungsfreiheit im Hinblick auf die Konstruktion der Luftkammer und der in dieser gegebenenfalls unterzubringenden Aggregate. Dennoch wird die durch den Leitkörper erzeugte Wirbelströmung durch den Rost nicht beeinflußt, weil dieser aus konzentrisch zueinander angeordneten kreisförmigen Ringelementen besteht.

Die Ringelemente des Rostes können über radiale Rippen miteinander verbunden sein, die etwa den gleichen Anstellwinkel wie die Leitschaufeln des Leitkörpers aufweisen, damit sie den im Bereich des Leitkörpers erzeugten Wirbel nicht stören.

Unterhalb des Leitkörpers kann eine Luftkammer mit Einlaßstutzen angeordnet sein. Diese Luftkammer dient zur Beruhigung der in die Luftkammer eintretenden Luft, die dann im wesentlichen störungsfrei und lediglich mit dem vom Leitkörper erzeugten Wirbel aus dem Fußbodenauslaß austritt.

Zweckmäßig kann die Luftkammer einen kreisringförmigen Querschnitt sowie einen mittigen Dom aufweisen, wobei der Einlaßstutzen radial in die Luftkammer mündet. Der in die Luftkammer eintretende Luftstrom wird dementsprechend umgelenkt und in der den Dom umgebenden Ringkammer beruhigt.

Der Fußbodenauslaß ist auf einfache Weise zugänglich und läßt sich leicht montieren, wenn der Rost und der Leitkörper in einer Ausnehmung eines Ringeinsatzes angeordnet sind, der am Dom der Luftkammer abgestützt ist. Insbesondere können der Ringeinsatz und die Luftkammer jeweils Ringflansche aufweisen, die eine Bodenplatte über- bzw. unterfassen, wobei der Ringeinsatz sowie die Luftkammer mit einer im Bereich des Domes angeordneten Schraube gegeneinander verspannbar sind. Damit läßt sich der Fußbodenauslaß in der Öffnung einer Bodenplatte sicher verspannen. Gleichwohl bleiben Rost und Leitkörper zugänglich, weil sie aus dem Ringeinsatz herausgehoben werden können. Das hat weitere Vorteile, wie nachstehend beschrieben.

Zu Lüftungs- und Klimaanlagen gehört meistens auch eine Temperaturregelung mit Raumthermostaten. Die Raumthermostaten werden meistens an einer Wand des Raumes angeordnet. Sie liefern ein elektrisches Signal, das einem zentralen Regler zugeführt wird, der Temperatur und/oder Volumen der zugeführten Luft regelt. In Gebäuden mit sehr großen Räumen und im großen Abstand voneinander angeordneten Wänden oder Raumteilern ergibt sich häufig das Problem, geeignete Stellen für die Anordnung von Raumthermostaten zu finden. Das gilt insbesondere dann, wenn diese Räume mit Fußbodenauslässen ausgerüstet sind, die sich insbesondere für derartig große Räume eignen.

Andererseits werden in derartigen Fällen neben den Fußbodenauslässen für die Zuführung ggf. temperierter Luft in den Raum auch Fußbodeneinlässe vorgesehen, durch die verbrauchte Raumluft abgesaugt wird. Diese Bodeneinlässe sind mit einem unter dem Fußboden verlegten Leitungssystem verbunden, das mit einer Unterdruckquelle verbunden ist, die die verbrauchte Raumluft absaugt, ins Freie abführt oder der Lüstungs- und Klimaanlage wieder zuführt.

Eine derartige Anlage kann erfindungsgemäß vorteilhaft genutzt werden, wenn dicht neben dem Rost ein Kanal mündet, der mit der Unterdruckquelle zum Absaugen der Raumluft verbunden ist und wenn im Kanal ein Temperaturfühler angeordnet ist. Dieser Temperaturfühler ist in üblicher Weise Teil eines Thermostaten und über diesen mit dem Regler der Lüftungs- oder Klimaanlage verbunden. Überraschenderweise hat sich gezeigt, daß auch bei sehr geringen Druckunterschieden zwischen dem zu belüftenden Raum und dem unter dem Boden verlegten sowie an die Unterdruckquelle angeschlossenen Leitungssystem ein Teil der verbrauchten Raumluft durch den Kanal eintritt und den Temperaturfühler beaufschlagt. Ein zusätzlicher Thermostat im Raum wird folglich überflüssig. Es hat sich gezeigt, daß ein Druckunterschied von weniger als 10 Pascal zwischen dem zu belüftenden Raum und dem unter dem Boden verlegten Leitungssystem ausreichen, um eine einwandfreie Temperaturmessung zu gewährleisten. Größere Druckdifferenzen sind weder erforderlich noch erwünscht, weil sie eine andere Auslegung der Lüftungs- oder Klimaanlage sowie auf der Bodenkonstruktion erfordern.

Überraschenderweise hat sich gezeigt, daß auch der aus dem Rost austretende Wirbel der zugeführten Luft den Zustrom zu dem Kanal mit dem Temperaturfühler nicht stört. Der Kanal kann vorteilhafterweise zwischen seiner Mündung und dem Temperaturfühler eine Einschnürung aufweisen. Im übrigen kann der Kanal in einem Mantel des Ringeinsatzes angeordnet sein. Ohne weiteres besteht die Möglichkeit, einen Soll-Wert-Geber und einen an den Soll-Wert-Geber sowie an den Temperaturmeßfühler angeschlossenen Komparator zur Abgabe eines Regelsignals im Fußbodenauslaß anzuordnen, so daß nach dem Abheben des Rostes und ggf. des Leitkörpers wenigstens der Soll-Wert-Geber, der z. B. ein Potentiometer sein kann, zugänglich ist.

Im folgenden wird ein in der Zeichnung dargestelltes Ausführungsbeispiel der Erfindung erläutert ;
es zeigen :

Fig. 1 einen vertikalen Schnitt durch einen Fußbodenauslaß,

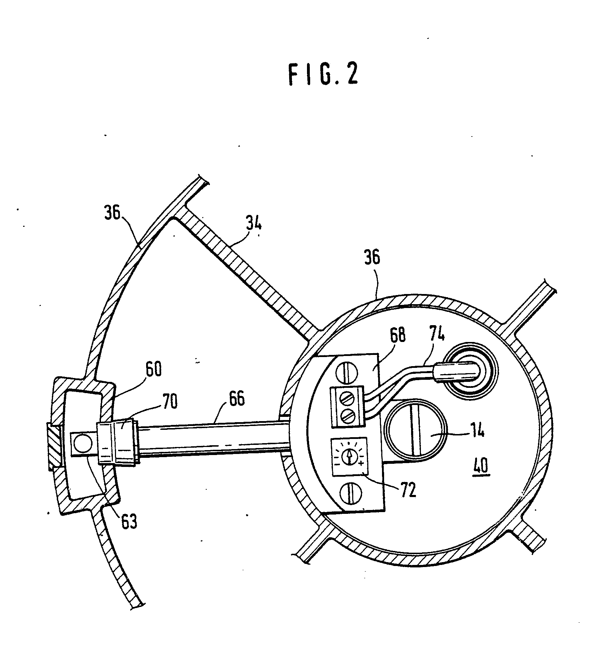

Fig. 2 teilweise einen Schnitt entlang der Linie 2-2 nach Fig. 1.

Fig. 3 in anderem Maßstab eine Draufsicht auf den Fußbodenauslaß nach Fig. 1, teilweise geschnitten,

Fig. 4 in anderem Maßstab eine Draufsicht auf einen Teil des Gegenstandes nach Fig. 1.

Der dargestellte Fußbodenauslaß besitzt einen oberen Ringeinsatz 10 und eine untere Luftkammer 12. Der Fußbodenauslaß wird in einer kreisförmigen Bodenöffnung angeordnet. Dazu wird der Ringeinsatz 10 von oben und die Luftkammer 12 von unten in den Boden eingesetzt. Die beiden Teile werden miteinander durch eine axial angeordnete Schraube 14 so miteinander verbunden, daß sie den Rand einer Bodenplatte 16 zwischen sich einspannen.

Die Luftkammer 12 ist schalenförmig ausgebildet. Sie besitzt einen Ringflansch 18 und einen mittigen Dom 20 mit einer ebenen Oberseite 22, unter der sich eine Fassung für eine Mutter 24 befindet, in die die Schraube 14 eingedreht wird. Der Dom 20 bildet etwa auf halber Höhe eine Schulter 26, damit die Abstützung des Ringeinsatzes 10 verbessert wird. Das wird später im einzelnen erläutert. An die Luftkammer 12 schließt radial ein Einlaßstutzen 28 an, der mit einer nicht dargestellten Lüftungs- oder Klimaanlage verbindbar ist. Diametral gegenüber dem Einlaßstutzen 28 ist eine vertikale Ausnehmung 30 in der Wandung der Luftkammer 12 vorgesehen, deren Zweck ebenfalls später erläutert wird.

Die in der Lüftungs- oder Klimaanlage konditionierte Luft tritt durch den Einlaßstutzen 28 in eine Ringkammer 31 ein, die den Dom 20 umgibt und die oben offen ist. Die Luftkammer dient dementsprechend dazu, den eintretenden horizontalen Luftstrahl vertikal nach oben umzulenken und auf einen ringförmigen Querschnitt zu verteilen.

Der Ringeinsatz 10 besitzt einen zentralen Kragen, der einstückig mit Radialstegen 34 und einem zum Kragen 32 koaxialen, zylindrischen Mantel 36 ausgebildet ist. Der obere Rand des Mantels 36 geht in einen Ringflansch 38 über. Wie dargestellt, erstreckt sich der Ringflansch 38 über den Rand einer Bodenöffnung, so daß die zugeordnete Bodenplatte zwischen dem Ringflansch 38 des Ringeinsatzes 10 sowie dem Ringflansch 18 der Luftkammer 12 eingespannt ist. Der zentrale Kragen trägt eine Montageplatte 40, die sich quer durch den Innenraum des Kragens 32 erstreckt. Die Schraube 14 ist durch eine Öffnung in der Montageplatte 40 hindurchgeführt.

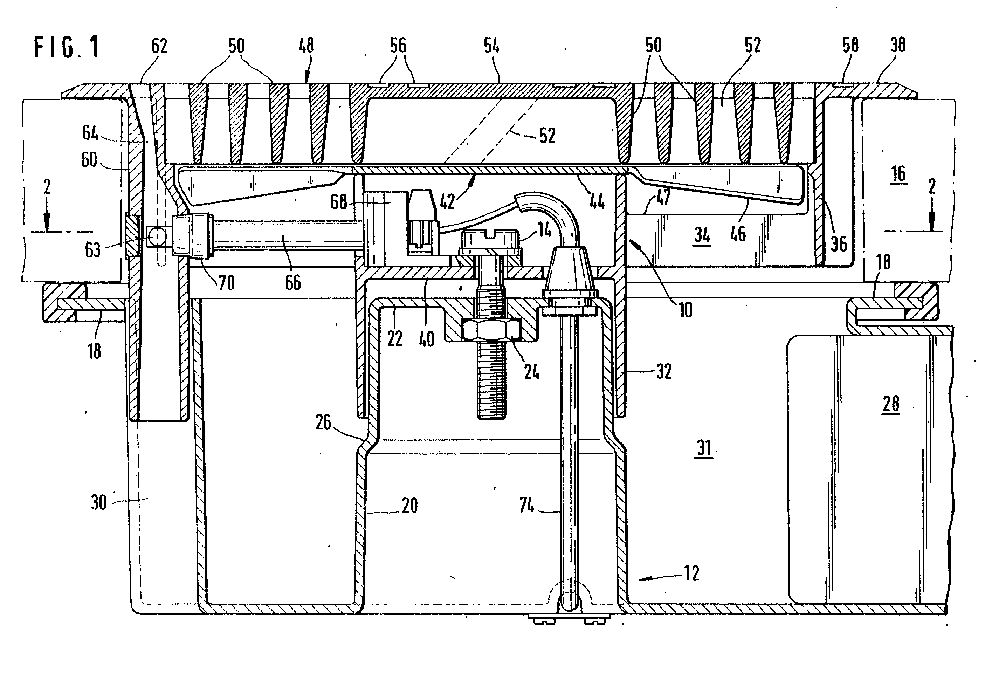

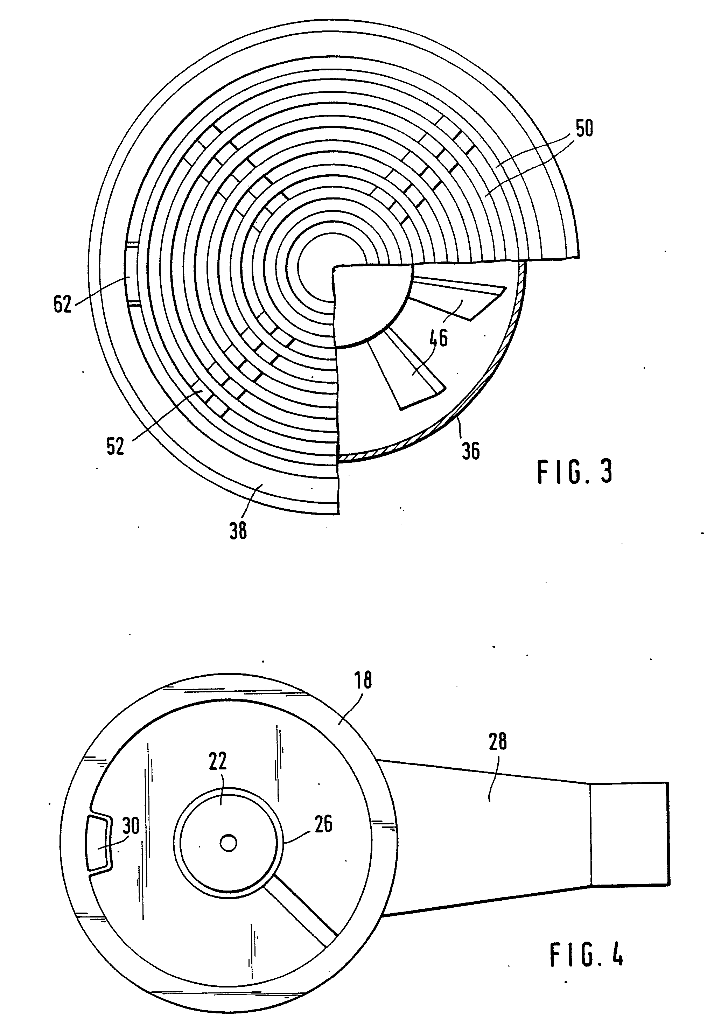

Auf dem oberen Rand des Kragens 32 ist ein Leitkörper 42 abgestützt. Dieser Leitkörper besteht aus einer Scheibe 44, von der sich in radialer Richtung mehrere Leitschaufeln 46 erstrecken. Aus einem Vergleich der Fig. 1 und 3 entnimmt man, daß die Ebenen der Leitschaufeln 46 zur Vertikalen geneigt sind. Der Leitkörper 42 ist bei der dargestellten Ausführung aus einer Blechscheibe hergestellt worden, die mit radialen Einschnitten versehen wurde. Die Leitschaufeln 46 zwischen den Einschnitten wurden dann verdrillt.

An jedem Radialsteg 34 ist eine Ausnehmung 47 zur Aufnahme des Leitkörpers 42 vorgesehen.

Wie dargestellt bildet der Ringeinsatz 10 eine von seinem Mantel 36 definierte Ausnehmung, in der unmittelbar oberhalb des Leitkörpers 42 ein kreisförmiger Rost 48 angeordnet ist. Der Rost besteht aus mehreren konzentrisch zueinander angeordneten Ringelementen 50, deren Dicke vertikal nach unten abnimmt. Die Ringelemente 50 sind über vier unter gleichem Winkel angeordnete Rippen 52 miteinander verbunden, die vom innersten Ringelement ausgehen und sich bis über das äußerste Ringelement hinaus erstrecken sowie an der Innenseite des Mantels 36 abgestützt sind. Jede Rippe 52 besitzt die gleiche Tiefe wie die Ringelemente 50. Die Rippen 52 sind jedoch geneigt, wie das in Fig. 1 mit gestrichelten Linien dargestellt ist. Der Anstellwinkel der Rippen 52 beträgt etwa 40° zur Vertikalen. Der kreisförmige Bereich, der vom innersten Ringelement 50 definiert ist, ist von einer durchgehenden Platte 54 abgedeckt, die an ihrer Oberseite zwei kreisförmige und zueinander konzentrische Ausnehmungen 56 trägt. Die Abmessungen der Ausnehmungen 56 entsprechen den Abmessungen der Zwischenräume zwischen den Ringelementen 50. Eine ähnliche ringförmige Ausnehmung 58 befindet sich auf dem Ringflansch 38 des Ringeinsatzes 10, so daß der Eindruck entsteht, daß ringförmige Öffnungen sich über die gesamte Oberfläche des Fußbodenauslasses erstrecken.

An einer dem Einlaßstutzen 28 gegenüberliegenden Stelle ist im Mantel 36 des Ringeinsatzes 10 ein vertikaler Kanal 60 angeordnet. Dieser Kanal 60 besitzt eine Mündung 62, die im Bereich der Ausnehmung 58 des Ringflansches 20 angeordnet ist. Der größte Teil des Kanals 60 besitzt einen rechteckigen Querschnitt, dessen Abmessung die gleiche ist wie die Abmessung der Mündung 62 in Umfangsrichtung, dessen radiale Abmessung jedoch wesentlich größer ist. Die radiale Abmessung des Kanals 60 ist bei der dargestellten Ausführung in radialer Richtung um den Faktor 1,75 größer als an der Mündung 62. Der Kanal 60 erstreckt sich in vertikaler Richtung ungefähr bis zum unteren Rand des Kragens 32 sowie innerhalb der Ausnehmung 30 an der Luftkammer 12. Zwischen der Mündung 62 und dem Bereich im wesentlichen gleichen Querschnittes befindet sich eine Einschnürung 64, deren kleinste radiale Abmessung bei der dargestellten Ausführung ungefähr halb so groß ist wie die entsprechende radiale Abmessung an der Mündung 62.

Innerhalb des Kanals 60 ist im Bereich der gleichbleibenden Querschnitte ein Temperaturfühler 63 an einem Arm 66 angeordnet, der sich in radialer Richtung bis zu einer Konsole 68 erstreckt, die auf der Oberseite der Montageplatte 40 angeordnet ist. Ein konischer Dichtungsring 70 auf dem äußeren Ende des Arms 66 dichtet eine zugeordnete Öffnung für den Arm in der Luftkammer 12 ab. Bei dem Temperaturfühler kann es sich um ein Thermopaar, einen Thermostaten oder um ein Halbleiterelement handeln. Unabhängig von seinem jeweiligen Aufbau liefert der Temperaturfühler 63 ein elektrisches Signal, welches in einer auf der Konsole 68 angeordneten Schaltung mit dem Signal eines eingestellten Potentiometers 72 verglichen wird. Das Vergleichssignal wird über Leitungen 74 einem entfernt angeordneten Regler weitergegeben.

Der dargestellte Fußbodenauslaß funktioniert wie folgt:

Der Fußbodenauslaß wird über dem Einlaßstutzen 28 und ggf. weitere Leitungen mit einem Volumenregler verbunden, der konditionierte Luft von einer zentralen Lüftungs- oder Klimaanlage erhält und jeweils eine bestimmte Luftmenge einer Anzahl von gleichartigen Fußbodenauslässen zuführt. Der Boden, in den der Fußbodenauslaß eingebaut ist, enthält außerdem eine Anzahl von Einlässen, durch die verbrauchte Raumluft unter der Wirkung eines leichten Unterdrucks zwischen dem Raum und einem unter dem Boden angeordneten Leitungssystems abgezogen wird. Der Unterdruck wird von einer nicht dargestellten Unterdruckquelle erzeugt. Die verbrauchte Raumluft wird entweder an die Atmosphäre abgegeben oder der Lüftungs- oder Klimaanlage wieder zugeführt.

Die durch den Einlaßstutzen 28 in die Luftkammer 12 eintretende Luft wird in einem ringförmigen Luftstrom nach oben umgelenkt. Die Luftkammer 12 definiert eine Ringkammer 31, die nach strömungstechnischen Gesichtspunkten ausgelegt ist. Beispielsweise besitzt der Dom die Schulter 26, damit der untere Rand des Kragens 32 des Ringeinsatzes 10 keine vorstehende Kante bildet. Die Ringkammer 31 dient zur Beruhigung des horizontal eintretenden Luftstrahls, der mit geringen Verlusten und insbesondere auch bei geringer Geräuschbildung nach oben umgelenkt wird.

Der nach oben gerichtete ringförmige Luftstrom trifft dann auf die Leitschaufeln 46 des Leitkörpers 42. Die Leitschaufeln 46 erzeugen einen Wirbel, dessen Wirbelachse im wesentlichen senkrecht zur Ebene des Fußbodens gerichtet ist. Der im Bereich des Leitkörpers 42 in Drehung versetzte ringförmige Luftstrahl passiert dann die ringförmigen Kanäle zwischen den Ringelementen 50, die der Drehbewegung keinen wesentlichen Widerstand entgegensetzen. Die Rippen 52 könnten für die Drehbewegung des Luftstrahls zwar einen Widerstand bilden, sie besitzen aber, wie oben beschrieben, etwa den gleichen Anstellwinkel wie die Leitschaufeln 46 des Leitkörpers 42 und setzen deshalb der Drehbewegung keinen Widerstand entgegen. Dementsprechend setzt sich der im Bereich des Leitkörpers 42 erzeugte Wirbel auch außerhalb des Fußbodenauslasses im Raum fort. Die aus dem Fußbodenauslaß austretende Luft mischt sich schnell mit der Umgebungsluft, sie verliert schnell ihre Geschwindigkeit, so daß ein rascher Temperaturausgleich gewährleistet ist.

Aus konstruktiven Gründen sowie im Hinblick auf die Dichtigkeit verschiedener Bauelemente des Fußbodens ist das Unterdrucksystem zur Erzeugung eines Differenzdruckes von nicht mehr als 10 Pascal zwischen dem Raum und dem unter dem Boden unter dem Boden angeordneten Leitungssystem ausgelegt. Es hat sich jedoch gezeigt, daß dieser niedrige Differenzdruck ausreicht, um einen wesentlichen Teil der Raumluft durch die Mündung 62 in den Kanal 60 und damit über den Temperaturfühler 63 zu ziehen. Es war nicht zu erwarten, daß dies auch bei derartig geringen Differenzdrucken möglich ist, insbesondere auch in unmittelbarer Nähe des nach oben austretenden Luftwirbels. Das vom Temperaturfühler 63 abgegebene Signal kann dann dazu verwendet werden, das Volumen der dem betreffenden Raum zuzuführenden Luft zu regeln. In der Praxis genügt es, wenn ein Fußbodenauslaß von mehreren an den gleichen Volumenstromreglern angeschlossenen mit einem Temperaturfühler 63 ausgerüstet ist, während die anderen Fußbodenauslässe lediglich mitgeregelt werden.

Weil der kreisförmige Rost 48 und der Leitkörper 42 lediglich in den Ringeinsatz 10 eingesetzt sind, können sie leicht entfernt werden, wenn die Soll-Temperatur am Potentiometer 72 neu eingestellt werden soll.

Die Möglichkeit, im Boden genaue Temperaturmessungen der Raumluft durchzuführen, erleichtert und vereinfacht die Temperaturregelung wesentlich. Gesonderte Raumthermostaten und zugeordnete Leitungen zum zentralen Regler sind überflüssig. Die elektrische Verbindung des Temperaturfühlers 63 im Fußbodenauslaß zum zugeordneten Volumenregler kann sehr einfach sein und insbesondere längs der Zuführungsleitung für die Luft verlegt sein.

In der Zeichnung ist nur ein Ausführungsbeispiel der Erfindung erläutert. Andere Ausführungen sind möglich. Z. B. kann der Leitkörper 42 auch anders ausgebildet sein. Er kann Flügel oder Prallbleche aufweisen, die entweder im Ringeinsatz 10 oder auch innerhalb der Luftkammer 12 angeordnet sind. Die Luftkammer sollte aber als Beruhigungs- und Stabilisierungskammer so ausgelegt sein, daß sie der Wirbel erzeugenden Einrichtung einen nach oben gerichteten, beruhigten Luftstrahl mit geringem Geräuschpegel zuführt. Die Herstellung des Leitkörpers 42 aus einer Blechscheibe hat den Vorteil großer Einfachheit. Nichtsdestoweniger sind auch andere Konstruktionen möglich, z. B. aus · Kunststoffspritzguß. Ferner ist es auch vorteilhaft, wenn der Leitkörper 42 ein von dem Rost 48 gesondertes Bauteil ist, weil der Rost 48 in der Lage sein muß, übliche Fußbodenlasten aufzunehmen und dementsprechend ausgelegt sein muß. Die Konstruktion des Leitkörpers 42 kann dagegen ausschließlich im Hinblick auf die Erzeugung eines Wirbels nach optimalen aerodynamischen Gesichtspunkten erfolgen.

Es versteht sich, daß in bestimmten Einsatzfällen, z. B., wenn der Fußbodenauslaß mitgeregelt wird, ein Temperaturfühler weggelassen werden kann.

In anderen Fällen, z. B. wenn Fußbodenauslässe am Rand eines sehr hohen Raumes angeordnet sind, ist es auch möglich, den Leitkörper herauszunehmen, weil dieser lediglich in die zugeordnete Ausnehmung des Ringeinsatzes eingelegt ist. Auch in diesen Fällen kann ein Temperaturfühler vorgesehen sein oder nicht.

Wenn bestimmte strenge Feuerschutzvorschriften eingehalten werden müssen, sollten die wesentlichen Bauteile des Fußbodenauslasses aus Metall bestehen. Für andere Anwendungszwecke kommen auch Ausführungen aus Kunststoff in Frage.

Schließlich kann man auch Blindringe in die ringförmigen Ausnehmungen zwischen den Ringelementen 50 einsetzen, um den Fußbodenauslaß an andere Strömungsverhältnisse, z. B. bei geringeren Strömungsgeschwindigkeiten, anzupassen.

## Patentansprüche

1. Fußbodenauslaß für Lüftungs- und Klimaanlagen mit einer in einen Boden einsetzbaren, an einen Einlaßstutzen (28) angeschlossenen Luftkammer (12), die mit einem Rost (48) abgedeckt ist und in der sich Leitelemente (46) befinden, dadurch gekennzeichnet, daß zum Erzeugen eines Wirbels mit im wesentlichen senkrecht zur Rostebene gerichteter Wirbelachse der Rost (48) aus konzentrisch zueinander angeordneten, kreisförmigen Ringelementen (50) besteht und unter dem Rost (48) ein scheibenförmiger Leitkörper (42) mit radial von der Scheibe ausgehenden, gegen die Ebene des Leitkörpers (42) verdrillten Leitschaufeln (46) angeordnet ist.

2. Fußbodenauslaß nach Anspruch 1, dadurch gekennzeichnet, daß die Ringelemente (50) des Rostes (48) über radiale Rippen (52) miteinander verbunden sind, die etwa den gleichen Anstellwinkel wie die Leitschaufeln (46) des Leitkörpers (42) aufweisen.

3. Fußbodenauslaß nach einem der Ansprüche 1 oder 2, dadurch gekennzeichnet, daß unterhalb des Leitkörpers (42) eine Luftkammer (12) mit einem Einlaßstutzen (28) angeordnet ist.

4. Fußbodenauslaß nach einem der Ansprüche 1 bis 3, dadurch gekennzeichnet, daß die Luftkammer (12) einen kreisringförmigen Querschnitt sowie einen mittigen Dom (20) aufweist und daß der Einlaßstutzen (28) radial in die Luftkammer (12) mündet.

5. Fußbodenauslaß nach einem der Ansprüche 1 bis 4, dadurch gekennzeichnet, daß de Rost (48) und der Leitkörper (42) in einer Ausnehmung eines Ringeinsatzes (10) angeordnet sind, der am Dom (20) der Luftkammer (12) abgestützt ist.

6. Fußbodenauslaß nach Anspruch 5, dadurch gekennzeichnet, daß der Ringeinsatz (10) und die Luftkammer (12) jeweils Ringflansche (38, 18) aufweisen, die eine Bodenplatte (16) über- bzw. unterfassen, und daß der Ringeinsatz (10) sowie die Luftkammer (12) mit einer im Bereich des Domes (20) angeordneten Schraube (14) gegeneinander verspannbar sind.

7. Fußbodenauslaß nach einem der Ansprüche 1 bis 6, gekennzeichnet durch einen dicht neben dem Rost mündenden Kanal (60), der mit einer Unterdruckquelle zum Absaugen der Raumluft verbunden ist, und durch einen Temperaturfühler (63) im Kanal (60).

8. Fußbodenauslaß nach Anspruch 7, dadurch gekennzeichnet, daß der Kanal (60) zwischen seiner Mündung (62) und dem Temperaturfühler (63) eine Einschnürung (64) aufweist.

9. Fußbodenauslaß nach einem der Ansprüche 7 oder 8, dadurch gekennzeichnet, daß der Kanal (60) in einem Mantel (36) des Ringeinsatzes (10) angeordnet ist.

10. Fußbodenauslaß nach einem der Ansprüche 7 bis 9, gekennzeichnet durch einen Soll-Wert-Geber (72) und einen an den Ist-Wert-Geber (72) sowie an den Temperaturmeßfühler (63) angeschlossenen Komparator zur Abgabe eines Regelsignals.

## Claims

1. Floor outlet for ventilating and air conditioning systems, having an air chamber (12) which can be inserted into a floor and is connected to an inlet piping connection (28), this air chamber (12) being covered by a grill (48) and containing guide elements (46), characterized in that to produce an eddy with an axis of eddy which is directed substantially square to the surface plane of the grill, the grill (48) comprises circular ring elements (50) which are arranged concentrically to each other and a discoid guide member (42) is arranged under the grill (48), this guide member (42) having guide vanes (46) issuing radially from the disk, these guide vanes twisted towards the surface plane of the guide member (42).

2. Floor outlet according to claim 1, characterized in that the ring elements (50) of the grill (48) are connected to each other by means of radial ribs (52), these ribs having approximately the same angle of pitch as the guide vanes (46) of the guide member (42).

3. Floor outlet according to one of claims 1 or 2, characterized in that an air chamber (12) with a inlet piping connection (28) is arranged below the guide member (42).

4. Floor outlet according to one of claims 1 to 3, characterized in that the air chamber (12) has a circular-ring-shaped cross-section and a central dome (20) and in that the inlet piping connection (28) opens radially into the air chamber (12).

5. Floor outlet according to one of claims 1 to 4, characterized in that the grill (48) and the guide member (42) are arranged in a recess of a ring insert (10), this ring insert being supported on the dome (20) of the air chamber (12).

6. Floor outlet according to claim 5, characterized in that the ring insert (10) and the air chamber (12) each have ring flanges (38, 18), which grip a bottom plate (16) above and below respectively, and in that the ring insert (10) and the air chamber (12) can be clamped against each other by means of a screw (14) arranged in the area of the dome (20).

7. Floor outlet according to one of claims 1 to 6, characterized by a duct (60) opening out close beside the grill, this duct being connected to a source of underpressure for sucking out air from the room, and by a temperature sensor (63) in the duct (60).

8. Floor outlet according to claim 7, characterized in that the duct (60) has a constriction between its opening (62) and the temperature sensor (63).

9. Floor outlet according to one of claims 7 or 8, characterized in that the duct (60) is arranged in a casing (36) of the ring insert (10).

10. Floor outlet according to one of claims 7 to 9, characterized by an actual value transmitter (72) and a comparator for giving out a regulating signal, this comparator being connected to the actual value transmitter (72) and to the temperature sensor (63).

## Revendications

1. Echappement dans un plancher pour des installations de ventilation et de climatisation, comprenant une chambre d'air (12) qui peut être logée dans le sol, qui est reliée à une tubulure d'entrée (28), qui est recouverte par une grille (48) et dans laquelle se trouvent des éléments déflecteurs (46), caractérisé par le fait que, pour engendrer un tourbillon dont l'axe est, pour l'essentiel, perpendiculaire au plan de la grille, cette grille (48) se compose d'éléments annulaires (50) circulaires et concentriques, un corps déflecteur (42) en forme de disque étant monté sous la grille (48) et muni d'ailettes déflectrices (46) qui partent radialement du disque et qui sont gauchies par rapport au plan du corps déflecteur (42).

2. Echappement de plancher selon la revendication 1, caractérisé par le fait que les éléments annulaires (50) de la grille (48) sont reliés entre eux par des nervures radiales (52) qui présentent approximativement le même angle d'inclinaison que les ailettes déflectrices (46) du corps déflecteur (42).

3. Echappement de plancher selon l'une des revendications 1 et 2, caractérisé par le fait qu'une chambre d'air (12) comprenant une tubulure d'entrée (28) est disposée au-dessous du corps déflecteur (42).

4. Echappement de plancher selon l'une des revendications 1 à 3, caractérisé par le fait que la chambre d'air (12) présente une section transversale circulaire, ainsi qu'un dôme central (20), et par le fait que la tubulure d'entrée (28) débouche radialement dans la chambre d'air (12).

5. Echappement de plancher selon l'une des revendications 1 à 4, caractérisé par le fait que la grille (48) et le corps déflecteur (42) sont disposés dans un évidement d'une pièce d'insertion annulaire (10) qui est appuyée sur le dôme (20) de la chambre d'air (12).

6. Echappement de plancher selon la revendication 5, caractérisé par le fait que la pièce d'insertion annulaire (10) et la chambre d'air (12) présentent chacune une bride annulaire (38, 18) qui serre une plaque de sol (16), respectivement par-dessus et par-dessous, et par le fait que la pièce d'insertion annulaire (10) et la chambre d'air (12) peuvent être serrées l'une contre l'autre par un boulon (14) disposé dans la région du dôme (20).

7. Echappement de plancher selon l'une des revendications 1 à 6, caractérisé par un canal (60) qui débouche tout près de la grille et qui est relié à une source de dépression pour aspirer l'air de la pièce, et par un capteur de température (63) dans le canal (60).

8. Echappement de plancher selon la revendication 7, caractérisé par le fait que le canal (60) présente un rétrécissement (64) entre son embouchure (62) et le capteur de température (63).

9. Echappement de plancher selon l'une des revendications 7 ou 8, caractérisé par le fait que le canal (60) est disposé dans une enveloppe (36) de la pièce d'insertion annulaire (10).

10. Echappement de plancher selon l'une des revendications 7 à 9, caractérisé par un transmetteur de valeur de consigne (72) et par un comparateur relié au transmetteur de valeur de consigne (72) ainsi qu'au capteur de température (63) pour fournir un signal de régulation.

FIG. 1

# FIG. 2

FIG. 3

FIG. 4